# FASCICULE DE BREVET EUROPEEN

(11) **EP 3 870 522 B1**
(45) Date de publication et mention de la délivrance du brevet: **19.03.2025**
(21) Numéro de dépôt: 19789999.0
(22) Date de dépôt: 23.10.2019
(51) Int. Cl.: B65D 77/04, B65D 19/10, B65D 77/06, G01G 3/00, G01G 19/52, G01G 23/37

(54) **DISPOSITIF DE STOCKAGE D'AU MOINS UN MATÉRIAU EN VRAC**
VORRICHTUNG ZUM LAGERN VON MINDESTENS EINEM SCHÜTTGUT
DEVICE FOR STORING AT LEAST ONE BULK MATERIAL

(30) Priorité: 24.10.2018 FR 1859833
(43) Date de publication de la demande: 01.09.2021
(73) Titulaire: Nanolike, 31400 Toulouse (FR)
(72) Inventeur: DIGIANANTONIO, Lucas, 31000 Toulouse (FR); POIROT, David, 31400 Toulouse (FR)
(74) Mandataire: A.P.I. Conseil
(86) Numéro de dépôt international: PCT/EP2019/078919
(87) Numéro de publication internationale: WO 2020/084006

(56) Documents cités:
- WO-A1-2008/144913
- WO-A1-2017/118599
- WO-A2-2005/037668
- CN-A- 103 625 736

## Description

L'invention concerne un dispositif de stockage d'au moins un matériau en vrac comprenant un capteur de force. Plus particulièrement, l'invention concerne un dispositif de stockage d'au moins un matériau en vrac permettant la détermination du taux de remplissage dudit récipient.

Les grands récipients pour vrac (GRV) également couramment appelés conteneurs « IBC » (pour *« Intermediate Bulk Container »*) sont utilisés dans de nombreux domaines tels que dans l'industrie chimique, pharmaceutique, agroalimentaire, cosmétique ou encore dans le domaine médical. Les grands récipients pour vrac les plus courants présentent une capacité d'environ 1 000 L. Ils peuvent contenir différents types de produits liquides tels que de l'eau, des solvants organiques, des peintures, des résidus chimiques dangereux, des matières premières alimentaires ou encore des boissons, ou de produits pulvérulents tels que des matières premières sous forme de billes, des poudres alimentaires, des céréales (grains de riz, de blé...) ou encore des semences agricoles.

Le niveau de remplissage ou taux de remplissage de tels récipients de type grands récipients pour vrac est généralement contrôlé empiriquement par des opérateurs et ne permet pas d'anticiper de façon optimale la gestion des stocks et les quantités de produits disponibles, ni d'éviter toute rupture de stock.

Il a été proposé des capteurs ultrasoniques à disposer à l'intérieur d'un récipient afin de déterminer le niveau de remplissage du récipient. Cependant, de tels capteurs présentent une fiabilité altérée notamment par l'exposition au produit introduit à l'intérieur du récipient.

On connaît de CN207312306U un dispositif comprenant un récipient pouvant contenir un liquide, un cadre rectangulaire et un support comprenant quatre capteurs de force disposés sous le récipient de façon à déterminer le poids total dudit récipient et ses variations. Le récipient repose uniquement sur les quatre capteurs de force et le fond du récipient est distant du cadre. Le dispositif selon CN207312306U comprend également une mémoire comprenant la nature du liquide à l'intérieur du récipient.

On connait également de WO 2005/037668 un récipient pour tabac comprenant un dispositif de pesée permettant de déterminer le poids du tabac dans le récipient. Le dispositif de pesée comprend des cellules de pesée ou des capteurs de pression.

On connait également de CN 103625736 un chariot de stockage comprenant un plateau supérieur et un plateau inférieur, le plateau supérieur présentant une fente munie d'un instrument de pesée permettant de déterminer la masse totale des produits disposés sur le chariot.

Cependant, de tels récipients munis de tels dispositifs présentent un coût élevé et ne permettent pas une généralisation de leur utilisation à l'échelle industrielle pour tout type de produit ou d'industrie, notamment dans le domaine du transport de matériaux en vrac. En particulier, des dispositifs adaptés pour la pesée de l'ordre de 1 000 L de matériau en vrac, soit parfois plus d'une tonne, sont d'autant plus onéreux.

L'invention vise à pallier ces inconvénients.

L'invention vise en particulier à proposer un dispositif peu onéreux permettant de déterminer une donnée représentative du taux de remplissage d'un récipient.

Elle vise également à proposer un tel dispositif dont les manipulations, le stockage, le transport, l'emballage et l'installation sont simples, ne nécessitent pas de précautions particulières, puissent être réalisées par des opérateurs non spécialisés, et ne risquent en aucune manière d'affecter les performances du capteur de force.

Elle vise également à proposer un tel dispositif qui soit résistant à l'environnement extérieur, notamment à l'humidité ou aux agressions chimiques ou mécaniques, ainsi qu'aux variations de température.

L'invention concerne donc un dispositif de stockage d'au moins un matériau en vrac selon la revendication 1.

En d'autres termes, le poids dudit matériau en vrac présent dans le récipient ne repose qu'en partie sur le ou les capteurs de force (c'est-à-dire ne repose qu'en partie sur l'ensemble desdits capteurs de force) et en aucune façon uniquement sur un ensemble de capteurs de force. Un dispositif selon l'invention se distingue donc d'un dispositif de mesure du poids total d'un matériau contenu dans un récipient (ou du poids total d'un récipient avec son contenu ou non).

Ledit dispositif de mesure de force peut comprendre un ou plusieurs capteurs de force (et comprend en particulier tous les capteurs de force disposés sous le fond du récipient et au contact du fond du récipient du dispositif de stockage).

Dans un dispositif de stockage selon l'invention, l'unique capteur de force ou l'ensemble des capteurs de force dudit dispositif de mesure de force, dont chaque capteur de force est disposé sous le fond dudit récipient et au contact dudit fond, n'est pas soumis au poids total du matériau en vrac introduit dans ledit récipient. Le fond dudit récipient repose donc également sur au moins un support, un tel support étant distinct du récipient et donc du fond du récipient.

Les inventeurs ont constaté que l'utilisation d'un capteur de force sur lequel ledit récipient ne repose qu'en partie suffisait à permettre une détermination fiable du taux de remplissage dudit récipient et/ou de la variation du taux de remplissage dudit récipient. En particulier, un dispositif de stockage d'au moins un matériau en vrac selon l'invention permet de déterminer le taux de remplissage dudit récipient et/ou sa variation de façon simplifiée et économique, sans avoir besoin de passer par une mesure du poids total du matériau en vrac contenu dans ledit récipient, une telle mesure de la masse totale (ou du poids total) impliquant nécessairement que la totalité du poids dudit matériau en vrac introduit dans un récipient soit uniquement supportée par le dispositif de pesée d'un tel dispositif.

Le dispositif selon l'invention est posé sur un support, ledit support est soumis au poids dudit matériau en vrac introduit dans ledit récipient et au poids dudit récipient, le récipient reposant également sur ledit support. Conformément à l'invention, ledit dispositif comprend un support présentant une face supérieure de réception du fond dudit récipient, le fond du récipient, le support et chaque capteur de force étant agencés de telle sorte qu'au moins une partie du fond du récipient est supportée en contact direct de la face supérieure de réception, ladite face supérieure de réception étant adaptée pour pouvoir être soumise au moins en partie au poids dudit matériau en vrac introduit dans ledit récipient.

Selon l'invention chaque capteur de force est disposé entre le fond dudit récipient et ledit support de sorte que le support soit soumis au moins partiellement au poids dudit matériau en vrac introduit dans ledit récipient, chaque capteur de force étant soumis uniquement partiellement au poids dudit matériau en vrac introduit dans ledit récipient.

Un capteur de force sur lequel ledit récipient ne repose qu'en partie, ledit récipient reposant également sur un support (distinct dudit capteur de force), suffit à permettre une détermination fiable du taux de remplissage dudit récipient et/ou de la variation du taux de remplissage dudit récipient.

Dans tout le texte, le haut et le bas et les termes « supérieur » et « inférieur », sont définis par rapport au champ de gravité terrestre. En particulier, le récipient étant disposé sur ledit support, un élément situé en haut est du côté du récipient et un élément situé en bas est du côté du support.

Dans tout le texte, les expressions « un capteur de force » ou « ledit capteur de force » s'appliquent à chaque capteur de force d'un dispositif de mesure de force d'un dispositif de stockage selon l'invention.
chaque capteur de force peut être disposé à tout endroit de la face supérieure de réception, notamment sensiblement sous le centre du fond du récipient ou entre tout bord périphérique de la face inférieure du récipient (c'est-à-dire du fond) et son centre.

Ledit récipient peut contenir un matériau adapté pour pouvoir s'écouler, à la façon d'un liquide, c'est-à-dire un matériau choisi dans le groupe formé des liquides et des matériaux pulvérulents (solides pulvérulents en particulier). De tels matériaux sont également appelés matériaux « en vrac ».

Un capteur de force utilisé dans un dispositif de stockage selon l'invention est autonome, n'est pas en contact avec le contenu du récipient et est résistant aux conditions de transport desdits récipients, à leur lavage ou nettoyage, à la chaleur (par exemple à des températures allant jusqu'à 90°C).

Dans certains modes de réalisation conformes à l'invention, chaque capteur de force comprend au moins un élément sensible dont une caractéristique électrique varie en fonction d'une force exercée par ledit récipient sur ledit capteur de force.

Dans certains modes de réalisation conformes à l'invention, chaque capteur de force comprend au moins une jauge de déformation.

Une jauge de déformation (généralement qualifiée de façon impropre « jauge de contraintes »), présente au moins une caractéristique électrique (en générale la résistance ou la capacité) qui varie en fonction d'un état de déformation de la surface d'un solide sur laquelle est disposée ladite jauge de déformation.

Dans certains modes de réalisation conformes à l'invention, chaque capteur de force comprend un boitier incorporant deux jauges de déformation et un élément de déformation, les deux jauges de déformation étant fixées sur ledit élément de déformation. Dans certains modes de réalisation conformes à l'invention, le boitier dudit capteur de force est formé en matériau rigide.

Dans certains modes de réalisation conformes à l'invention, chaque jauge de déformation présente au moins une caractéristique électrique qui varie en fonction de sa déformation, ledit capteur de force étant agencé de telle sorte que ladite caractéristique électrique varie en fonction d'un état de déformation dudit élément de déformation. L'élément de déformation peut prendre diverses formes, par exemple la forme d'une plaque, d'une lamelle, d'une poutre, d'un bâtonnet, ou encore d'un enroulement de type spirale. L'élément de déformation peut être formé d'au moins un matériau choisi dans le groupe formé des matériaux métalliques, des matériaux polymères, des matériaux céramiques et de leurs composites.

Dans certains modes de réalisation conformes à l'invention, ledit dispositif de stockage selon l'invention comprend un circuit électronique :
- relié électriquement à chaque jauge de déformation,
- adapté pour mesurer ladite caractéristique électrique de chaque jauge de déformation, et pour délivrer un signal, dit signal de mesure, représentatif de ladite caractéristique électrique de chaque jauge de déformation.

Chaque jauge de déformation d'un capteur de force selon l'invention présente des plots de connexion électrique permettant de relier électriquement cette jauge de déformation à un circuit électronique adapté pour mesurer ladite caractéristique électrique de la jauge de déformation.

Chaque capteur de force selon l'invention peut présenter toutes formes et toutes dimensions, selon les applications, et en particulier selon le nombre d'éléments sensibles et leur nature.

Dans certains modes de réalisation possibles, un capteur de force selon l'invention présente une forme de disque, avec un diamètre de l'ordre de 1 cm à 5 cm, notamment de l'ordre de 2 cm à 3 cm. Le capteur de force peut également présenter une forme globalement parallélépipédique avec une largeur supérieure à 0,5 cm -notamment inférieure à 10 cm, par exemple de l'ordre de 1 cm à 3 cm- et une longueur supérieure à 2 cm -notamment inférieure à 20 cm, par exemple de l'ordre de 2 cm à 8 cm- . Toutes autres formes (portion de cylindre, calotte, prismatique, forme non remarquable...) et dimensions sont possibles.

Dans certains modes de réalisation conformes à l'invention, ledit capteur de force présente une plus petite dimension, c'est-à-dire une épaisseur, comprise entre 1 mm et 15 mm.

Dans certains modes de réalisation conformes à l'invention, chaque capteur de force présente une face supérieure, dite face de contact, sensiblement plane, ladite face de contact étant adaptée pour pouvoir être en contact avec ladite face inférieure du récipient. Dans certains modes de réalisation conformes à l'invention, ladite face de contact de chaque capteur de force (face supérieure du boitier du capteur de force) est adaptée pour pouvoir agir sur l'élément de déformation dudit capteur de force (éventuellement par l'intermédiaire d'un piston disposé à l'intérieur dudit capteur de force, entre la face de contact du capteur de force et ledit élément de déformation).

Dans certains modes de réalisation conformes à l'invention, chaque capteur de force présente une face de fixation adaptée pour pouvoir permettre la fixation dudit capteur de force sur la face de réception dudit support.

La forme de la face de fixation peut être quelconque, et est adaptée à celle de la surface du solide sur laquelle le capteur doit être fixé. En particulier, la face de fixation peut être plane. En variante, la face de fixation peut être une surface gauche, par exemple cylindrique ou une calotte ou une surface polyédrique ou autre. Ainsi, la face de fixation peut être choisie par exemple dans le groupe formé des faces planes, des faces cylindriques -notamment cylindriques de révolution- concaves, des faces cylindriques -notamment cylindriques de révolution- convexes, des calottes sphériques concaves, des calottes sphériques convexes, des calottes paraboloïdes concaves, des calottes paraboloïdes convexes, des faces polyédriques concaves et des faces polyédriques convexes. La face de fixation peut également présenter une forme gauche quelconque non remarquable, ni convexe ni concave.

Ledit capteur de force peut être assemblé (collé et/ou vissé par exemple) audit support et/ou au fond du récipient ou encore être simplement positionné entre le support et le récipient (avant ou après mise en place dudit récipient dans ou sur le support).

Dans certains modes de réalisation conformes à l'invention, ledit dispositif comprend un accumulateur électrique. Dans certains modes de réalisation conformes à l'invention, chaque capteur de force est relié à un boitier électronique secondaire comprenant au moins un accumulateur électrique (une pile ou une batterie par exemple) et une carte électronique reliée audit accumulateur électrique. Ledit boitier électronique secondaire peut également comprendre en outre un module de communication sans fil. Un tel boitier électronique secondaire présente l'avantage de permettre de limiter l'encombrement du capteur de force, le boitier électronique secondaire pouvant être disposé sur un côté du récipient ou au niveau de sa face supérieure ou encore fixé au support ou encore intégré au récipient ou au support, tout en étant relié audit capteur de force par un câble.

En alternative, chaque capteur de force peut comprendre un boitier comprenant également ledit accumulateur électrique, ladite carte électronique reliée audit accumulateur électrique et ledit module de communication sans fil, sans nécessité de prévoir un tel boitier électronique secondaire. Un unique boitier comprenant le capteur de force est alors disposé sous le fond du récipient.

Dans certains modes de réalisation conformes à l'invention, ledit dispositif comprend un module de communication sans fil. Un tel module de communication peut permettre la transmission et/ou la réception de toute donnée relative au récipient (son volume, sa forme...), à la nature du matériau en vrac contenu dans le récipient, à la température, au taux de remplissage dudit récipient...

Un tel module de communication sans fil peut être choisi par exemple parmi un module de communication radiofréquence, un module de communication infrarouge, un module de communication optique, un module de communication magnétique, un module de communication par induction. Avantageusement, il peut s'agir d'un module radiofréquence permettant la transmission du signal de mesure selon tout protocole radiofréquence approprié (Wi-Fi^{®}, Bluetooth^{®}, ZigBee^{®}, SigFox^{®}, LoRaWan^{®}, protocole de téléphonie mobile (GPRS, UMTS, LTE, WiMax...)...).

Dans certains modes de réalisation conformes à l'invention, chaque boitier du dispositif peut être formé d'au moins un matériau polymérique par exemple choisi dans le groupe formé du polyimide, des polyoléfines (notamment du polyéthylène (PE) -notamment du polyéthylène haute densité (PEHD) ou du polyéthylène basse densité (PELD) - du poly(téréphtalate d'éthylène) (PET), du polypropylène (PP), du polyéthylène naphtalate (PEN), et du copolymère cyclo-oléfine (COC)), du polyméthacrylate de méthyle (PMMA), du polycarbonate (PC), du polyétheréthercétone (PEEK), du poly(chlorure de vinyle) (PVC), de l'acrylonitrile butadiène styrène (ABS), et des polymères halogénocarbonés (notamment fluorocarbonés tels que le polytétrafluoroéthène (PTFE) et le poly(fluorure de vinylidène) (PVDF)).

Le dispositif de mesure de force peut comprendre un ou plusieurs capteurs de force. Dans certains modes de réalisation conformes à l'invention, ledit dispositif de mesure de force comprend un unique capteur de force. Bien qu'un seul capteur de force suffise à déterminer de façon fiable le taux de remplissage dudit récipient ou sa variation, rien n'empêche que le dispositif de mesure de force comprenne plusieurs capteurs de force, par exemple deux, trois, quatre ou encore cinq capteurs de force, ou plus (identiques ou différents les uns des autres, de préférence identiques). Un dispositif de stockage selon l'invention comprenant un dispositif de mesure de force comprenant au moins deux capteurs de force permet en particulier d'augmenter la précision de la détermination du taux de remplissage.

Divers modes de réalisation peuvent être envisagés en ce qui concerne le récipient d'un dispositif selon l'invention, notamment sa taille et sa forme. Le récipient peut présenter une forme parallélépipédique, cubique, cylindrique ou des formes plus complexes intermédiaires telles qu'un récipient présentant une forme de quatre cylindres juxtaposés deux à deux. Dans certains modes de réalisation conformes à l'invention, ledit récipient présente une forme générale sensiblement cubique. Le support associé à chaque récipient peut également prendre diverses formes. Un récipient cubique peut par exemple être disposé à l'intérieur d'un support lui-même cubique (ou d'une ou deux portion(s) de cube) de dimensions légèrement supérieures. Le support peut prendre la forme d'un bac recevant uniquement la partie basse du récipient et présenter une forme conjuguée d'un tel récipient pouvant lui-même présenter toute forme précitée.

Dans certains modes de réalisation conformes à l'invention, ledit récipient présente une contenance maximale comprise entre 5 L (0,005 m³) et 5000 L (5 m³), en particulier entre 50 L (0,05 m³) et 2000 L (2 m³), notamment entre 100 L (0,1 m³) et 1500 L (1,5 m³), et plus particulièrement entre 500 L (0,5 m³) et 1200 L (1,2 m³).

Dans certains modes de réalisation conformes à l'invention, ledit récipient présente une ouverture adaptée pour permettre l'introduction dudit matériau en vrac à l'intérieur dudit récipient. Il peut par exemple s'agir d'une ouverture munie d'un bouchon dévissable.

Dans certains modes de réalisation conformes à l'invention, ledit récipient est formé d'au moins un matériau choisi dans le groupe formé des matériaux métalliques, des matériaux polymères, des matériaux cellulosiques et des matériaux composites. Dans certains modes de réalisation conformes à l'invention, ledit récipient est formé d'au moins un matériau polymère choisi dans le groupe formé des polymères thermoplastiques et des polymères thermodurcissables. En particulier, le récipient d'un dispositif peut être formé d'au moins un matériau polymérique par exemple choisi dans le groupe formé du polyimide, des polyoléfines notamment du polyéthylène (PE) -notamment du polyéthylène haute densité (PEHD) ou du polyéthylène basse densité (PELD) - du poly(téréphtalate d'éthylène) (PET), du polypropylène (PP), du polyéthylène naphtalate (PEN), et du copolymère cyclo-oléfine (COC)), du polyméthacrylate de méthyle (PMMA), du polycarbonate (PC), du polyétheréthercétone (PEEK), du poly(chlorure de vinyle) (PVC), de l'acrylonitrile butadiène styrène (ABS), et des polymères halogénocarbonés (notamment fluorocarbonés tels que le polytétrafluoroéthène (PTFE) et le poly(fluorure de vinylidène) (PVDF)).

Le récipient est formé d'un matériau adapté pour permettre au fond dudit récipient d'être à la fois au contact de la face supérieure du capteur de force et au contact du support. Ceci est le cas pour tous les récipients de type des grands récipients pour vrac compte tenu de la faible épaisseur d'un capteur de force comparée aux dimensions des grands récipients pour vrac. Dans certains modes de réalisation conformes à l'invention, ledit récipient présente un fond formé d'au moins un matériau flexible. En particulier, le fond dudit récipient est formé en un matériau plus flexible que celui formant le capteur de force (ou en particulier que le matériau formant le boitier du capteur de force). De la sorte, le fond épouse la forme du boitier du capteur de force pour venir au contact du support. Cependant, rien n'empêche également d'utiliser un récipient dont le fond est rigide (notamment au moins aussi rigide que le boitier du capteur de force). Dans ce dernier cas, il faut veiller à ce que le fond rigide du récipient soit également au contact du support, en particulier en évitant de placer le capteur de force sous le centre dudit fond.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 est une vue schématique en perspective d'un dispositif selon un premier mode de réalisation de l'invention,
- la figure 2 est une vue schématique en perspective du dispositif de la figure 1 dans lequel le récipient a été retiré,
- la figure 3 est un schéma du capteur de force et du boitier électronique secondaire d'un dispositif selon l'invention,
- la figure 4 est une vue schématique en perspective de l'intérieur d'un capteur de force d'un dispositif selon l'invention,
- la figure 5 est un une vue schématique en coupe d'un dispositif selon un deuxième mode de réalisation de l'invention,
- la figure 6 est un diagramme illustrant un résultat du taux de remplissage d'un récipient d'un dispositif selon l'invention.

Sur les figures, les échelles ne sont pas nécessairement respectées, notamment en épaisseur, et ce à des fins d'illustration.

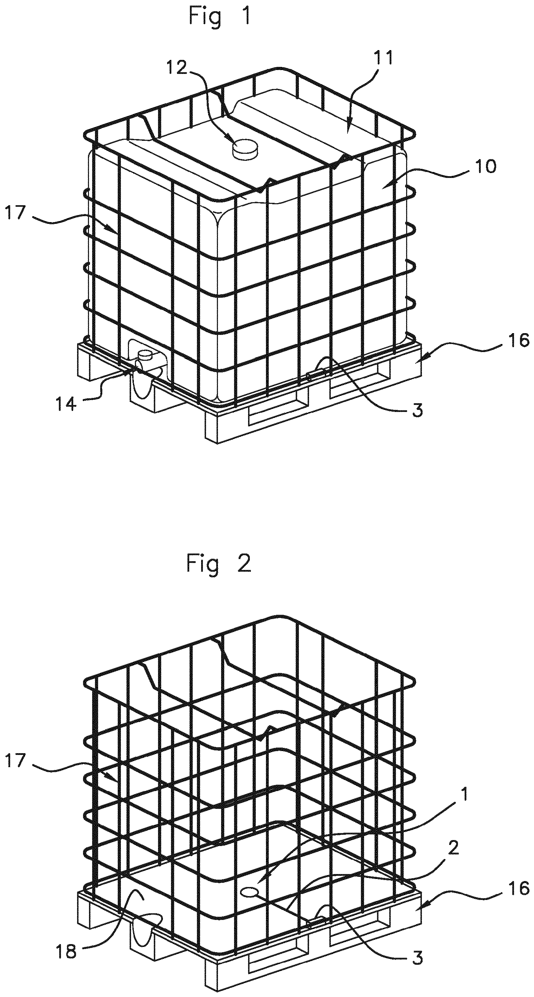

Le dispositif selon le premier mode de réalisation de l'invention représenté aux figures 1 à 2 comprend :
- un récipient 10 dans lequel peut être introduit ledit matériau en vrac choisi dans le groupe formé des liquides et des matériaux pulvérulents, ledit récipient présentant un fond adapté pour pouvoir être soumis au poids d'un matériau en vrac introduit dans le récipient,
- un dispositif de mesure de force comprenant un unique capteur 1 de force disposé sous le fond du récipient 10 et au contact dudit fond, de façon à être soumis uniquement partiellement au poids dudit matériau en vrac introduit dans ledit récipient,
- un support 16 présentant une face supérieure 18 de réception du récipient 10 adaptée pour pouvoir être soumise au moins en partie au poids du matériau en vrac introduit dans le récipient.

Dans ce premier mode de réalisation le récipient 10 et le support 16 forment un grand récipient pour vrac du type comprenant un support 16 présentant la forme d'une palette permettant la manutention du dispositif par un chariot à fourche. Le support 16 est également accompagné d'une structure 17 grillagée (ou cage grillagée) adaptée pour recevoir, protéger et renforcer mécaniquement le récipient 10. La structure 17 grillagée est en général métallique et la base sous forme de palette du support 16 peut être en matériau polymère, en bois ou encore en matériau métallique ou en matériau composite à matrice polymère.

Le récipient 10 présente une forme générale sensiblement cubique. Le récipient 10 présente une ouverture 12 formée d'un bouchon dévissable adapté pour permettre l'introduction dudit matériau en vrac à l'intérieur du récipient, l'ouverture 12 étant disposée sur la face supérieure 11, opposée au fond du récipient. Le récipient 10 représenté comprend également une sortie de liquide sous la forme d'une vanne 14 prévue au bas d'une face d'un côté du récipient.

Dans ce premier mode de réalisation d'un dispositif de stockage selon l'invention, le dispositif de mesure de force comprend un seul et unique capteur 1 de force, un seul capteur de force sur lequel le récipient ne repose qu'en partie étant suffisant pour permettre une détermination fiable du taux de remplissage du récipient et/ou une variation du taux de remplissage du récipient. Toutefois, rien n'empêche que le dispositif de mesure de force comprenne plusieurs capteurs de force, par exemple deux, trois, quatre ou encore cinq capteurs de force (identiques ou différents, de préférence identiques). L'utilisation d'un dispositif de mesure de force comprenant au moins deux capteurs de force permet d'augmenter la précision de la détermination du taux de remplissage en réalisant par exemple une double ou une triple mesure du taux de remplissage dudit récipient afin de les comparer.

Le capteur 1 de force est disposé au contact de la face inférieure du récipient (formant le fond du récipient) et à l'extérieur du récipient. Le capteur 1 de force présente une face supérieure de contact, sensiblement plane et adaptée pour pouvoir être en contact avec ledit fond du récipient 10. Le capteur 1 de force présente une face inférieure de fixation adaptée pour pouvoir permettre la fixation dudit capteur de force sur la face supérieure 18 de réception du support.

Dans le premier mode de réalisation représenté, comme on peut le voir à la figure 2, le capteur 1 de force est disposé sensiblement sous le centre du fond du récipient 10. Toutefois, rien n'empêche de le disposer à tout autre endroit entre le fond du récipient et le support, tant que le capteur 1 de force est disposé sensiblement entièrement au-dessous du fond du récipient et sur la face de réception dudit fond du support.

Le capteur 1 de force est relié électriquement par un câble 2 à un boitier 3 secondaire comprenant un accumulateur électrique (une batterie 4) et une carte électronique 5 reliée à la batterie 4. La carte électronique 5 est composée d'un module d'acquisition du signal électrique du capteur 1 de force et d'un module de communication sans fil pouvant renvoyer les données, par exemple sur un réseau sans fil à faible consommation énergétique (également appelé LPWAN^{®}). Le boitier électronique secondaire 3 comprend également une antenne 6.

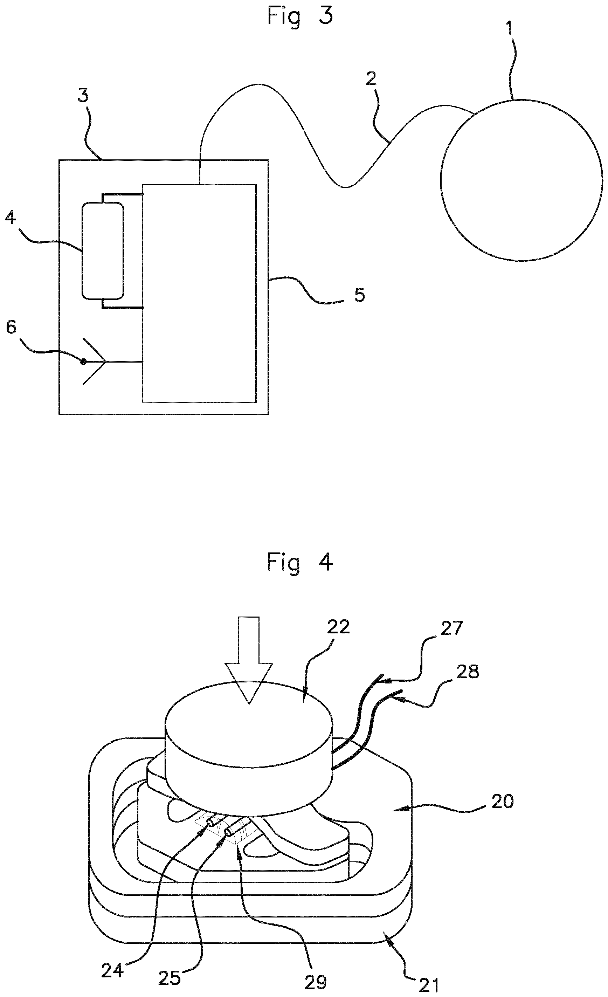

La figure 3 est une représentation schématique du capteur 1 de force et du boitier 3 secondaire reliés électriquement l'un à l'autre.

Les données recueillies sont par exemple la localisation, la température ou encore l'état de la cuve (vide/plein, sale/propre ...).

Ces données sont par exemple envoyées avec une fréquence d'envoi d'une heure. La fréquence d'envoi des données, les périodes ON/OFF du capteur 1 de force, ou encore les seuils d'alerte sont paramétrables à distance.

La figure 4 est une représentation schématique des composants du capteur 1 de force. Le capteur 1 de force comprend un boitier externe (non représenté en figure 4) incorporant deux jauges 24, 25 de déformation enrobées d'une résine 29, un élément 20 de déformation, une base 21 sur laquelle repose l'élément 20 de déformation, et un piston 22 susceptible de transmettre une force (symbolisée par la flèche représentée en figure 4) au sommet de l'élément 20 de déformation. La force symbolisée par la flèche représentée en figure 4 provient de l'action du poids du récipient et du matériau en vrac contenu dans le récipient sur la face de contact du boitier du capteur de force, elle-même transmise au piston 22. Les deux jauges de déformation étant fixées sur l'élément 20 de déformation. Chaque jauge 24, 25 de déformation présente au moins une caractéristique électrique qui varie en fonction de sa déformation, le capteur de force étant agencé de telle sorte que ladite caractéristique électrique varie en fonction d'un état de déformation de l'élément 20 de déformation. L'élément 20 de déformation peut prendre diverses formes différentes de celle représentée en figure 4, par exemple la forme d'une lamelle, d'une poutre ou d'un bâtonnet, ou encore d'une spirale. L'élément 20 de déformation peut être forme d'un matériau métallique (alliages métalliques notamment), d'un matériau céramique, d'un matériau polymère ou d'un matériau composite.

Le dispositif comprend également un circuit électronique :
- relie électriquement à chaque jauge 24, 25 de déformation par des câbles 27, 28,
- adapté pour mesurer ladite caractéristique électrique de chaque jauge 24, 25 de déformation, et pour délivrer un signal de mesure, représentatif de ladite caractéristique électrique de chaque jauge de déformation.

Les jauges 24, 25 de contraintes sont des jauges de contraintes résistives, c'est-à-dire que leur résistance varie en fonction de la déformation de la pièce 20 de déformation, qui dépend elle-même de la force exercée par le fond du récipient sur le piston 22.

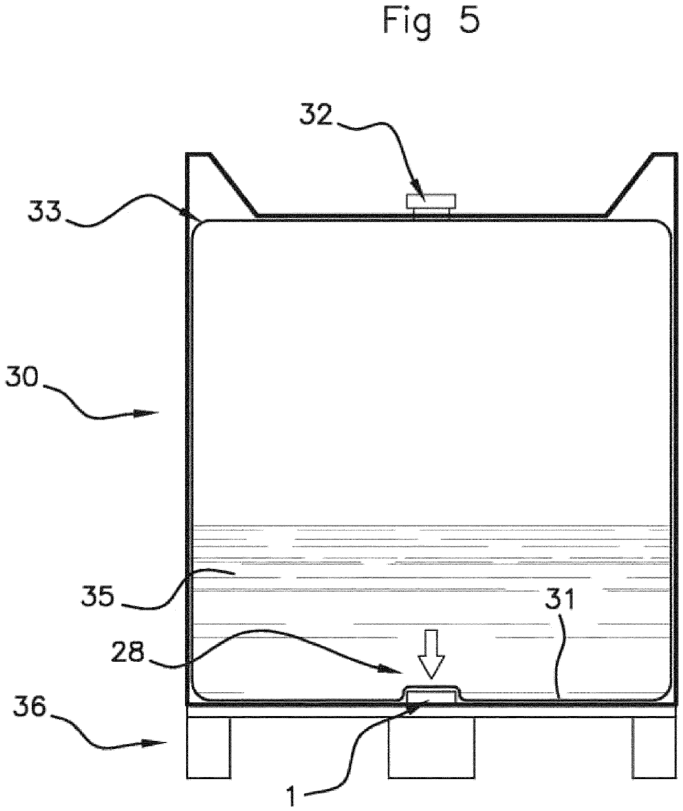

Le deuxième mode de réalisation représente en coupe transversale sur la figure 5 diffère du premier mode de réalisation par le fait qu'il s'agisse d'un grand récipient pour vrac pliable comprenant un récipient forme d'un sac 33 en matériau souple dispose à l'intérieur d'un contenant 30 rigide pouvant être replie dans une configuration présentant un encombrement inferieur a sa configuration normale d'utilisation. Le récipient comprenant le sac 33 souple est dispose sur une palette. Le dispositif comprend un support 36 présentant la forme d'une palette permettant la manutention du dispositif par un chariot a fourche.

Le récipient présente une ouverture 32 adaptée pour permettre l'introduction d'un matériau en vrac 35 à l'intérieur dudit récipient, l'ouverture étant disposée sur la face supérieure, opposée au fond 31 du récipient.

Le capteur 1 de force est disposé au contact du fond du sac 33 souple, au contact et a l'extérieur de celui-ci. Dans le deuxième mode de réalisation représenté a la figure 5 le capteur 1 de force est disposé sensiblement au centre sous le fond 31 du récipient. Toutefois, rien n'empêche de le disposer à un autre endroit entre le fond du récipient et le support 36, par exemple plus proche d'un bord du sac 33 en matériau souple du récipient. Les résultats de mesure du taux de remplissage du récipient d'un grand récipient pour vrac varient d'un récipient à un autre (géométries, propriétés des matériaux différentes...). Un capteur placé sous un grand récipient pour vrac renvoie une valeur de résistance électrique qui est convertie en valeur de déformation (principe d'une jauge de déformation). Pour un grand récipient pour vrac rempli avec 1000 L d'eau on obtient par exemple une déformation de 0,055 % de l'élément 20 de déformation et une déformation de 0,035 % pour 500 L d'eau. Une loi permet de relier le volume (taux ou pourcentage de remplissage) à la déformation de l'élément 20 de déformation du capteur 1 de force, cette loi pouvant être déterminée en particulier dès le premier remplissage total du récipient à partir de son état initial vide, la variation de force mesurée étant alors considérée comme une variation de 0 % à 100 % de remplissage. Le débit d'introduction du matériau en vrac dans le récipient lors de ce premier remplissage n'a pas besoin d'être constant mais peut varier et le remplissage peut être continu ou discontinu (remplissage en plusieurs fois). Il n'est pas nécessaire de connaitre la capacité maximale du récipient, ni la masse volumique du matériau en vrac introduit dans le récipient mais ces données peuvent bien sûr également permettre d'affiner le taux de remplissage déterminé. Lors du vidage, l'évolution de la force perçue par le capteur de force et la comparaison de toute valeur correspondante à la première valeur maximale perçue par le capteur de force (associée à un taux de remplissage de 100 %) permet d'en déduire (à l'aide d'une loi mathématique établie en fonction des paramètres particuliers relatifs au récipient et à la nature du matériau en vrac notamment) un volume restant dans le récipient ou une valeur de taux de remplissage et donc par exemple de prévoir une alerte lorsque ce taux de remplissage s'approche de zéro ou descend par exemple au-dessous de 10 %, de 20 % ou encore de 30 %. Malgré quelques approximations, les inventeurs ont constaté, de façon surprenante, qu'un tel procédé permet d'obtenir un résultat présentant une précision comprise en 2 % et 20 %, par exemple de l'ordre de 10 %, une telle précision étant largement suffisante et fiable pour la plupart des applications et industriels utilisant de tels grands récipients pour vrac.

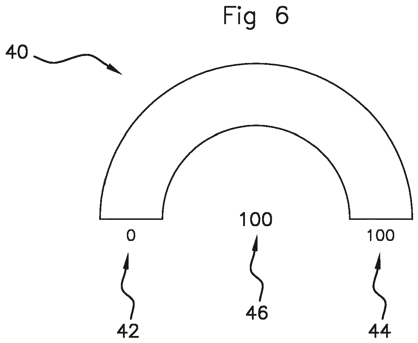

La figure 6 représente un exemple de présentation du résultat de mesure du taux de remplissage du récipient. Le taux de remplissage est représenté sous la forme d'un arc de cercle pouvant aller d'une valeur minimale 42 (de zéro, soit 0 %) à une valeur maximale 44 (de 100, soit 100 %). La valeur effective déterminée 46 (100 dans l'exemple représenté à la figure 6) est disposée sous l'arc de cercle.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, des récipients présentant des formes plus complexes peuvent être utilisés. En outre, rien n'empêche d'utiliser d'autres types de capteurs de force que des capteurs à jauge de déformation, par exemple des capteurs de force hydraulique, pneumatique, piézoélectrique ou encore des capteurs à déviation de faisceau.

## Revendications

1. - Dispositif de stockage d'au moins un matériau (35) en vrac, ledit dispositif comprenant
- un récipient (10, 33) dans lequel peut être introduit ledit matériau en vrac choisi dans le groupe formé des liquides et des matériaux pulvérulents, ledit récipient (10, 33) présentant une face inférieure formant un fond (31) adapté pour pouvoir être soumis au poids dudit matériau en vrac introduit dans ledit récipient,
- un support (16, 36), distinct du récipient (10, 33) et du fond (31) du récipient (10, 33), présentant une face supérieure (18) de réception du fond dudit récipient (10, 33),
- un dispositif de mesure de force comprenant au moins un capteur (1) de force situé à l'extérieur dudit récipient (10, 33), disposé sous la face inférieure formant le fond (31) du récipient (10, 30) et au contact de ladite face inférieure formant le fond (31),
dans lequel, le dispositif de stockage est agencé de manière à ce que la face inférieure formant le fond (31) du récipient (10,33) repose à la fois sur le dispositif de mesure de force et sur le support (16, 36), de telle sorte que :
- le récipient (10, 33) ne repose qu'en partie sur le dispositif de mesure de force,
- au moins une partie du fond (31) du récipient est supportée en contact direct de la face supérieure (18) de réception du support (16, 36),
- ladite face supérieure (18) de réception du support (16, 36) est adaptée pour pouvoir être soumise au moins en partie au poids dudit matériau en vrac introduit dans ledit récipient, et
- ledit dispositif de mesure de force n'est pas soumis au poids total du matériau en vrac introduit dans ledit récipient,
ledit dispositif de stockage permettant ainsi de déterminer le taux de remplissage dudit récipient (10, 33) et/ou sa variation sans avoir besoin de passer par une mesure du poids total du matériau en vrac (35) contenu dans ledit récipient (10, 33).

2. - Dispositif selon la revendication 1,
**caractérisé en ce que** chaque capteur (1) de force comprend au moins une jauge de déformation.

3. - Dispositif selon l'une des revendications 1 à 2, **caractérisé en ce que** chaque capteur (1) de force comprend un boitier incorporant deux jauges (24, 25) de déformation et un élément (20) de déformation, les deux jauges de déformation étant fixées sur ledit élément de déformation.

4. - Dispositif selon la revendication 3, **caractérisé en ce que** chaque jauge (24, 25) de déformation présente au moins une caractéristique électrique qui varie en fonction de sa déformation, chaque capteur de force étant agencé de telle sorte que ladite caractéristique électrique varie en fonction d'un état de déformation dudit élément (20) de déformation.

5. - Dispositif selon la revendication 4, **caractérisé en ce qu'**il comprend un circuit électronique
- relié électriquement à chaque jauge (24, 25) de déformation,
- adapté pour mesurer ladite caractéristique électrique de chaque jauge (24, 25) de déformation, et pour délivrer un signal, dit signal de mesure, représentatif de ladite caractéristique électrique de chaque jauge de déformation.

6. - Dispositif selon l'une des revendications 1 à 5, **caractérisé en ce que** chaque capteur (1) de force présente une plus petite dimension comprise entre 1 mm et 15 mm.

7. - Dispositif selon l'une des revendications 1 à 6, **caractérisé en ce que** chaque capteur (1) de force présente une face supérieure, dite face de contact, sensiblement plane, ladite face de contact étant adaptée pour pouvoir être en contact avec ledit fond (31) du récipient (10, 33).

8. - Dispositif selon l'une des revendications 1 à 7, **caractérisé en ce que** chaque capteur (1) de force présente une face inférieure de fixation adaptée pour pouvoir permettre la fixation dudit capteur de force sur la face supérieure (18) de réception du support.

9. - Dispositif selon l'une des revendications 1 à 8, **caractérisé en ce que** ledit dispositif de mesure de force comprend un unique capteur (1) de force.

10. - Dispositif selon l'une des revendications 1 à 9, **caractérisé en ce que** ledit récipient (10, 33) présente une contenance maximale comprise entre 500 L et 1200 L.

11. - Dispositif selon l'une des revendications 1 à 10, **caractérisé en ce que** ledit récipient (10, 33) présente une forme générale sensiblement cubique.

12. - Dispositif selon l'une des revendications 1 à 11, **caractérisé en ce que** ledit récipient (10, 33) présente une ouverture (12, 32) adaptée pour permettre l'introduction dudit matériau en vrac (35) à l'intérieur dudit récipient.

13. - Dispositif selon l'une des revendications 1 à 12, caractérisé en que ledit récipient (10, 33) présente un fond formé d'au moins un matériau flexible.

14. - Dispositif selon l'une des revendications 1 à 13, **caractérisé en ce qu'**il comprend un module de communication sans fil.

15. - Dispositif selon l'une des revendications 1 à 14, **caractérisé en ce qu'**il comprend un accumulateur électrique (4).

## Patentansprüche

1. Vorrichtung zum Lagern von mindestens einem Schüttgut (35), wobei die Vorrichtung umfasst:
- einen Behälter (10, 33), in den das Schüttgut, ausgewählt aus der Gruppe, bestehend aus Flüssigkeiten und pulverförmigen Materialien, eingebracht werden kann, wobei der Behälter (10, 33) eine untere Fläche aufweist, die einen Boden (31) bildet, der geeignet ist, dem Gewicht des in den Behälter eingebrachten Schüttguts ausgesetzt zu sein,
- einen Träger (16, 36), der von dem Behälter (10, 33) und von dem Boden (31) des Behälters (10, 33) unterschiedlich ist, der einer obere Fläche (18) zur Aufnahme des Bodens des Behälters (10, 33) aufweist,
- eine Kraftmessvorrichtung, die mindestens einen Kraftsensor (1) umfasst, der sich außerhalb des Behälters (10, 33) befindet, angeordnet unter der unteren Fläche, die den Boden (31) des Behälters (10, 30) bildet, und in Kontakt mit der unteren Fläche, die den Boden (31) bildet,
wobei die Lagervorrichtung derart eingerichtet ist, dass die untere Fläche, die den Boden (31) des Behälters (10, 33) bildet, sowohl auf der Kraftmessvorrichtung als auch auf dem Träger (16, 36) ruht, so dass:
- der Behälter (10, 33) nur teilweise auf der Kraftmessvorrichtung ruht,
- mindestens ein Teil des Bodens (31) des Behälters in direktem Kontakt mit der oberen Aufnahmefläche (18) des Trägers (16, 36) getragen wird,
- die obere Aufnahmefläche (18) des Trägers (16, 36) geeignet ist, mindestens teilweise dem Gewicht des Schüttguts ausgesetzt zu sein, das in den Behälter eingebracht wird, und
- die Kraftmessvorrichtung dem gesamten Gewicht des Schüttguts, das in den Behälter eingebracht ist, nicht ausgesetzt ist,
wobei die Lagervorrichtung somit erlaubt, den Füllstand des Behälters (10, 33) und/oder seine Schwankung zu bestimmen, ohne dass eine Messung des Gesamtgewichts des Schüttguts (35), das in dem Behälter (10, 33) vorhanden ist, durchgeführt werden muss.

2. Vorrichtung nach Anspruch 1, **dadurch gekennzeichnet, dass** jeder Kraftsensor (1) mindestens einen Verformungsmesser umfasst.

3. Vorrichtung nach einem der Ansprüche 1 bis 2, **dadurch gekennzeichnet, dass** jeder Kraftsensor (1) ein Gehäuse umfasst, in das zwei Verformungsmesser (24, 25) und ein Verformungselement (20) eingebaut sind, wobei die beiden Verformungsmesser an dem Verformungselement befestigt sind.

4. Vorrichtung nach Anspruch 3, **dadurch gekennzeichnet, dass** jedes Verformungsmesser (24, 25) mindestens eine elektrische Eigenschaft aufweist, die sich in Abhängigkeit von seiner Verformung ändert, wobei jeder Kraftsensor derart eingerichtet ist, dass sich die elektrische Eigenschaft in Abhängigkeit von einem Verformungszustand des Verformungselements (20) ändert.

5. Vorrichtung nach Anspruch 4, **dadurch gekennzeichnet, dass** sie eine elektronische Schaltung umfasst, die:
- mit jedem Verformungsmesser (24, 25) elektrisch verbunden ist,
- geeignet ist, die elektrische Eigenschaft jedes Verformungsmessers (24, 25) zu messen und ein Signal, bezeichnet als Messsignal, auszugeben, das für die elektrische Eigenschaft jedes Verformungsmessers repräsentativ ist.

6. Vorrichtung nach einem der Ansprüche 1 bis 5, **dadurch gekennzeichnet, dass** jeder Kraftsensor (1) eine kleinste Abmessung zwischen 1 mm und 15 mm aufweist.

7. Vorrichtung nach einem der Ansprüche 1 bis 6, **dadurch gekennzeichnet, dass** jeder Kraftsensor (1) eine im Wesentlichen ebene obere Fläche, bezeichnet als Kontaktfläche, aufweist, wobei die Kontaktfläche geeignet ist, mit dem Boden (31) des Behälters (10, 33) in Kontakt zu sein.

8. Vorrichtung nach einem der Ansprüche 1 bis 7, **dadurch gekennzeichnet, dass** jeder Kraftsensor (1) eine untere Befestigungsfläche aufweist, die geeignet ist, die Befestigung des Kraftsensors an der oberen Aufnahmefläche (18) des Trägers zu ermöglichen.

9. Vorrichtung nach einem der Ansprüche 1 bis 8, **dadurch gekennzeichnet, dass** die Kraftmessvorrichtung einen einzigen Kraftsensor (1) umfasst.

10. Vorrichtung nach einem der Ansprüche 1 bis 9, **dadurch gekennzeichnet, dass** der Behälter (10, 33) ein maximales Fassungsvermögen zwischen 500 L und 1200 L aufweist.

11. Vorrichtung nach einem der Ansprüche 1 bis 10, **dadurch gekennzeichnet, dass** der Behälter (10, 33) eine im Wesentlichen allgemein kubische Form aufweist.

12. Vorrichtung nach einem der Ansprüche 1 bis 11, **dadurch gekennzeichnet, dass** der Behälter (10, 33) eine Öffnung (12, 32) aufweist, die geeignet ist, die Einführung des Schüttguts (35) in das Innere des Behälters zu ermöglichen.

13. Vorrichtung nach einem der Ansprüche 1 bis 12, **dadurch gekennzeichnet, dass** der Behälter (10, 33) einen Boden aufweist, der aus mindestens einem flexiblen Material gebildet ist.

14. Vorrichtung nach einem der Ansprüche 1 bis 13, **dadurch gekennzeichnet, dass** sie ein drahtloses Kommunikationsmodul umfasst.

15. Vorrichtung nach einem der Ansprüche 1 bis 14, **dadurch gekennzeichnet, dass** sie einen elektrischen Akkumulator (4) umfasst.

## Claims

1. A device for storing at least one bulk material (35), said device comprising:
- a container (10, 33) into which said bulk material selected from the group formed by liquids and powdered materials can be introduced, said container (10, 33) having a lower face forming a bottom (31) adapted to be able to be subjected to the weight of said bulk material introduced into said container,
- a support (16, 36), separate from the container (10, 33) and from the bottom (31) of the container (10, 33), having an upper face (18) receiving the bottom of said container (10, 33),
- a force measuring device comprising at least one force sensor (1) located outside said container (10, 33), disposed under the lower face forming the bottom (31) of the container (10, 30) and in contact with said lower face forming the bottom (31),
wherein the storage device is arranged so that the lower face forming the bottom (31) of the container (10, 33) rests both on the force measuring device and on the support (16, 36), such that:
- the container (10, 33) rests only partly on the force measuring device,
- at least part of the bottom (31) of the container is supported in direct contact with the upper face (18) receiving the support (16, 36),
- said upper face (18) receiving the support (16, 36) is adapted to be able to be subjected at least partly to the weight of said bulk material introduced into said container, and
- said force measuring device is not subjected to the total weight of the bulk material introduced into said container,
said storage device thus making it possible to determine the filling rate of said container (10, 33) and/or its variation without having to go through a measurement of the total weight of the bulk material (35) contained in said container (10, 33).

2. The device according to claim 1, **characterized in that** each force sensor (1) comprises at least one strain gauge.

3. The device according to any of claims 1 to 2, **characterized in that** each force sensor (1) comprises a casing incorporating two strain gauges (24, 25) and a strain element (20), the two strain gauges being fixed to said strain element.

4. The device according to claim 3, **characterized in that** each strain gauge (24, 25) has at least one electrical characteristic which varies as a function of its strain, each force sensor being arranged such that said electrical characteristic varies as a function of a strain state of said strain element (20).

5. The device according to claim 4, **characterized in that** it comprises an electronic circuit:
- electrically connected to each strain gauge (24, 25),
- adapted to measure said electrical characteristic of each strain gauge (24, 25), and to deliver a signal, called measurement signal, representative of said electrical characteristic of each strain gauge.

6. The device according to any of claims 1 to 5, **characterized in that** each force sensor (1) has a smaller dimension comprised between 1 mm and 15 mm.

7. The device according to any of claims 1 to 6, **characterized in that** each force sensor (1) has an upper face, called contact face, which is substantially planar, said contact face being adapted to be able to be in contact with said bottom (31) of the container (10, 33).

8. The device according to any of claims 1 to 7, **characterized in that** each force sensor (1) has a lower fixing face adapted to be able to allow the fixing of said force sensor on the upper face (18) receiving the support.

9. The device according to any of claims 1 to 8, **characterized in that** said force measuring device comprises a single force sensor (1).

10. The device according to any of claims 1 to 9, **characterized in that** said container (10, 33) has a maximum capacity comprised between 500 L and 1,200 L.

11. The device according to any of claims 1 to 10, **characterized in that** said container (10, 33) has a generally substantially cubic shape.

12. The device according to any of claims 1 to 11, **characterized in that** said container (10, 33) has an opening (12, 32) adapted to allow the introduction of said bulk material (35) inside said container.

13. The device according to any of claims 1 to 12, **characterized in that** said container (10, 33) has a bottom formed of at least one flexible material.

14. The device according to any of claims 1 to 13, **characterized in that** it comprises a wireless communication module.

15. The device according to any of claims 1 to 14, **characterized in that** it comprises an electric accumulator (4).
